# EUROPÄISCHE PATENTSCHRIFT

(11) **EP 2 342 068 B1**
(45) Veröffentlichungstag und Bekanntmachung des Hinweises auf die Patenterteilung: **29.04.2015**
(21) Anmeldenummer: 09778858.2
(22) Anmeldetag: 07.10.2009
(51) Int. Cl.: B29C 70/48, B29C 70/46, H02K 5/12, B29C 45/14, B29C 45/16, B29C 45/56, B29C 45/26

(54) **VERFAHREN UND VORRICHTUNG ZUR HERSTELLUNG HOCHBELASTBARER KUNSTOFFFORMTEILE MIT HOHLPROFIL**
METHOD AND DEVICE FOR THE PRODUCTION OF HEAVY-DUTY PLASTIC MOLDED PARTS WITH A HOLLOW PROFILE
PROCÉDÉ ET DISPOSITIF DE FABRICATION DE PIÈCES EN PLASTIQUE MOULÉ À HAUTE RÉSISTANCE, PRÉSENTANT UN PROFIL CREUX

(30) Priorität: 07.10.2008 DE 102008052041
(43) Veröffentlichungstag der Anmeldung: 13.07.2011
(73) Patentinhaber: WILO SE, 44263 Dortmund (DE); Friedrich-Alexander-Universität Erlangen-Nürnberg, 91054 Erlangen (DE)
(72) Erfinder: MÜLLER, Thomas, Rudolf, 90419 Nürnberg (DE); WOHLLEBEN, Ralf, 91080 Uttenreuth (DE)
(74) Vertreter: Cohausz Hannig Borkowski Wißgott
(86) Internationale Anmeldenummer: PCT/EP2009/007199
(87) Internationale Veröffentlichungsnummer: WO 2010/040518

(56) Entgegenhaltungen:
- EP-A1- 1 236 564
- EP-A2- 1 584 452
- GB-A- 1 245 981
- JP-A- 3 022 842
- US-A- 2 905 578

## Beschreibung

Die vorliegende Erfindung betrifft ein Verfahren und eine Vorrichtung zur Herstellung hochbelastbarer Kunststoffformteile mit Hohlprofil, insbesondere Spaltrohre für Pumpen, in einem Formwerkzeug, mit zumindest einem ersten und einem zweiten Werkzeugteil, von denen zumindest ein Werkzeugteil zum Öffnen und Schließen des Formwerkzeugs relativ gegenüber dem anderen Werkzeugteil bewegt wird, wobei in dem ersten Werkzeugteil ein länglicher Hohlraum ausgebildet ist, in den ein länglicher Formkern des zweiten Werkzeugteils koaxial unter Ausbildung einer dem Hohlprofil entsprechenden Kavität eingeführt wird, und zunächst ein Verstärkungsmittel aus Endlosfasern auf den Formkern aufgebracht wird. Ein derartiges Verfahren ist aus der US 2 905 578 A bekannt. Die US 2 905 578 A offenbart ein Verfahren gemäß dem Oberbegriff des Anspruchs 1 und eine Vorrichtung gemäß dem Oberbegriff des Anspruchs 13. Die EP 1 236 564 A1 zeigt ein ähnliches Verfahren.

Es sind Verschiedene Verfahren und Vorrichtungen zur Herstellung von verstärkten Kunststoffformteilen in Hohlprofilform bekannt, die jeweils Vor- und Nachteile aufweisen, insbesondere im Hinblick auf die Herstellung von Spaltrohren. Spaltrohres werden für Pumpen mit nasslaufendem Rotor verwendet. Sie trennen den Rotorraum vom Statorraum und damit den in dem Fördermedium rotierenden Teil der Pumpe von deren elektrischem Teil. Entsprechend sind sie zwischen Rotor und Stator angeordnet. Hieraus resultierenden zahlreiche Anforderungen an das Spaltrohr. Es muss zum einen eine ausreichende mechanische Stabilität aufweisen, um den Drücken im Rotorraum Stand zu halten. Gleichzeitig darf es jedoch nicht zu dick ausgeführt sein. Denn dies bedingt einen größeren magnetischen Spalt zwischen Stator und Rotor und damit eine schlechtere magnetische Kraftübertragung. Weiterhin muss das Spaltrohr im Falle zu fördernder Chemikalien medienresistent, im Falle des Einsatzes in einer Heizungspumpe temperaturresistent sein. Aus alledem resultieren Anforderungen an das Herstellungsverfahren.

In der Regel werden hochbelastbare Spaltrohre zweiteilig aus einem Innenrohr und einer äußeren Schale hergestellt. Das Innenrohr wird in einer Spritzgussform aus einem mit Kurzfasern verstärkten thermoplastischen Kunststoffmaterial spritzgegossen. Die Herstellung der äußeren Schale erfolgt aus einem Faserverbundkunststoff, wobei Kohlenstofffasern, die mit einer duroplastischen Matrix vorimprägniert sind, in einem Wickelverfahren zu einem Verstärkungsrohr geformt werden. Durch diese mechanische Verstärkung wird die geforderte Festigkeit und Steifigkeit erreicht. Nach der Formgebung polymerisieren die Komponenten des Duroplasten auf einem Formkern und das konsolidierte Formteil kann abgenommen werden. Die beiden Schalen, d.h. Innenrohr und Verstärkungsrohr, werden montiert, indem die äußere Verstärkung auf das innere Spritzgießteil aufgeschoben wird. Somit entsteht ein hybrides Bauteil mit einer Werkstoffkombination aus thermoplastischen und duroplastischen Kunststoffen mit Verstärkungsfasern. Ein derartiges Bauteil weist gute Eigenschaften hinsichtlich der Druckfestigkeit und Stabilität auf und hat sich in der Praxis hinlänglich bewährt. Das Herstellungsverfahren ist zuverlässig und es entstehen geringe Ausfallraten.

Durch den Einsatz des thermoplastischen Innenteils, welches kein Verstärkungsgewebe enthält, ergibt sich allerdings die Notwendigkeit einer insgesamt größeren Wandstärke, um die nötige Festigkeit und Steifigkeit zu erreichen. Weiterhin führt der Einsatz eines Wickelverfahrens zur Herstellung des Außenteils zu einer Beschränkung bei der erreichbaren Oberflächengüte an der Außenseite. Auch sind die Geometrien, die erzeugt werden können, bei einem Wickelverfahren begrenzt. Ein Fertigungsprozess, der aus mehreren verschieden Einzelschritten besteht, bringt Nachteile in Bezug auf die erzielbare Qualität mit sich. Die vielen Einflussgrößen bieten viele Fehlermöglichkeiten und machen es schwierig, den Prozess in der Praxis robust auszulegen. Eine geringe Änderung der Eingangsgrößen führt zu starken, nicht genau prognostizierbaren Änderungen der Ausgangsgrößen. Die einzelnen Schritte dieses mehrstufigen Fertigungsprozesses ergeben hohe Herstellungskosten. Hierzu zählen unter anderem Handlingkosten, Lagerkosten, Lohnkosten, Maschinenkosten und Energiekosten. Für den serienmäßigen Einsatz der Wickeltechnik muss eine spezialisierte Maschine angeschafft werden, was hohe Investitionskosten mit sich bringt. Alternativ müsste das Verstärkungsrohr zugekauft werden. Das Herstellungsverfahren kann daher noch optimiert werden.

Das Verarbeiten von kurz- und langfaserverstärkten Kunststoffen beim Standardspritzgussverfahren ist in der Industrie weit verbreitet und wird seit Jahren erfolgreich angewendet. Die Fasern sind dabei bereits in das Kunststoffgranulat eingearbeitet und werden bei der Verarbeitung mit der Schmelze in die formgebende Kavität der Werkzeugmaschine eingespritzt. Bei der Verarbeitung ergeben sich jedoch Faserschädigungen, insbesondere eine Verkürzung der mittleren Faserlänge, unter anderem durch die Scherung der Kunststoffformmasse zwischen der Schnecke und dem Zylinder, was zur Minderung der Festigkeit führt. Der Einsatz von Endlosfasern oder Geweben ist nicht möglich, so dass eine höhere Wandstärke für das Spaltrohr verwendet werden muss. Da bei einem Spaltrohr eine möglichst geringe Wanddicke und geringe Verformbarkeit bei gleichzeitig hoher Festigkeit angestrebt wird, ist dieses Verfahren lediglich für kleinere Ausführungen geeignet. Für höhere Maschinengrößen mit großem Verhältnis des Fließweges zur Wandstärke ist der Standardspritzguss nicht geeignet.

Durch den Einsatz des Montagespritzgießens ist es möglich, Bauteile mit Endlosfaserverstärkung herzustellen. Dabei wird ein Bauteil, das mit Fasern verstärkt ist und der Grundform des herzustellenden Kunststoffformteils entspricht, wie beispielsweise das obengenannte Innenrohr, in das Spritzgusswerkzeug eingelegt und anschließend mit dem Kunststoff umspritzt. In diesem Fall wird die Verstärkung durch das Halbzeug sichergestellt und die von der Grundform abweichenden Formelemente durch den eingespritzten Kunststoff realisiert. Hierbei entstehen grundsätzlich festigkeitsmindernde Bindenähten. Um dies zu verhindern kann die Kavität axial gefüllt werden. Dieser Füllvorgang bewirkt aber, dass die einströmende Schmelze das Halbzeug "mitzieht" und es somit im Werkzeug verschiebt. Die Festigkeit ist demnach über die Bauteillänge nicht konstant, was bei hoch belasteten Komponenten nicht in Kauf genommen werden kann.

Bei dem so genannten LOREF-Verfahren (Locally Reinforced Thermoplastics) handelt es sich um eine Kombination aus Spritzguss und Faserverbundtechnik. Das Bauteil wird nur an den höchstbeanspruchten Stellen der Kunststoffstruktur durch unidirektionale Faserverbundeinlegeelemente verstärkt. Dabei wird das aus Glas- oder Kohlenstofffasern hergestellte und konsolidierte Halbzeug im Werkzeug platziert und anschließend mit Kunststoff umspritzt. Um das Halbzeug, auch Preform genannt, zu konsolidieren, müssen die trockenen Rovings mit der thermoplastischen Matrix getränkt und in Form gebracht werden. Dieser zusätzliche Verarbeitungsschritt verursacht weitere Kosten, die in der Serienproduktion unwirtschaftlich sind.

Eine weitere Methode ist das so genannte Wickelverfahren. Dabei werden die zuvor mit einer Thermoplast- oder Duroplastmatrix getränkten Verstärkungsfasern (Rovings) auf einen rotierenden Wickeldorn aufgewickelt. Bei der Produktion größerer Stückzahlen ist nur die Verwendung von Dauerkernen aus Edelstahl oder verchromten Stahl ökonomisch, was allerdings Hinterschnitte an der Innenseite unmöglich macht. Verfahrensbedingt sind auch Sprünge in der Wandstärke des Bauteils nicht realisierbar, was die Herstellung eines kragenförmigen Flansches am Spaltrohr ausschließt. Die erreichbare Oberflächengüte ist an der Außenseite ebenfalls gering.

Die Pultrusion, auch Strangziehen genannt, ist eine Methode zur Herstellung faserverstärkter Kunststoffprofile in einem kontinuierlichen Prozess. Als Halbzeuge werden Rovings sowohl in trockener als auch in vorimprägnierter Ausführung mit thermoplastischen oder duroplastischen Matrix verwendet. Diese werden dem Werkzeug axial zugeführt, zu einem Profil geformt, abgezogen, gekühlt und auf die gewünschte Länge zugeschnitten. Durch dieses Verfahren lassen sich nur Profile mit konstantem Querschnitt herstellen. Die durch Pultrusion gefertigten Rohre sind wegen der Beschaffenheit des Aufbaus, insbesondere des geringen erreichbaren Faserwinkels, nicht für Innendruck ausgelegt. Ein Spalttopf kann nicht hergestellt werden.

Bei so genannten Matrixinjektionsverfahren können wegen der benötigten, niedrigen Viskosität nur Duroplasten als Matrix verwendet werden. Die Viskosität von Thermoplasten ist höher wodurch deren Verarbeitung nur in wenigen Ausnahmefällen möglich ist. Diese Verfahren bieten zwar sowohl hinsichtlich der Formgebung des Bauteils, wie auch bei der Positionierung von Verstärkungsfasern große geometrische Freiheiten. Bei röhrenförmigen Elementen lässt sich der nötige Pressdruck senkrecht zur Bauteilwand nicht auf konventionelle Art durch das Schließen der Formhälften aufbringen. Deswegen müssten zusätzliche Maßnahmen für die Herstellung des Spaltrohres eingesetzt werden.

Bei dem Schlauchblas-RTM-Verfahren (RTM, Resin-Transfer-Moulding) werden schlauchförmige textile Preformen in eine Form eingelegt, mit einem Blasschlauch aufgeweitet und bis zum Abschluss der Faserverbund-Konsolidierung gegen die Forminnenwand gedrückt. Die Bauteilaußenseite kann relativ flexibel gestaltet werden, die Innenseite ist aufgrund der geringen Elastizität des Schlauches nur im geringen Maße flexibel, was die Herstellung von Querschnittssprüngen unmöglich macht. Das Resin-Transfer-Moulding ist des Weiteren ein Verfahren mit dem lediglich Bauteile aus Duroplasten hergestellt werden können.

bei dem so genannten Schleuderverfahren werden textile Verstärkungsstrukturen und das mit einem axial beweglichen Rohr gleichmäßig in Längsrichtung eingebrachte Matrixmaterial durch die Zentrifugalkraft gegen die Innenwand der Form gepresst und entlüftet. Die Härtung erfolgt durch die Beheizung der Stahlform oder durch eingeblasene Heißluft. Fasen und Flansche sind an der Außenseite nur begrenzt möglich, an der Innenseite ist nur ein konstanter, kreisförmiger Querschnitt realisierbar. Weiterhin sind mit dem Schleuderverfahren nur Duroplaste verarbeitbar, so dass diese Methode für die Herstellung von Spaltrohren ungeeignet ist.

Durch die zuvor genanten Fertigungsverfahren ist die anforderungsgerechte und wirtschaftliche Herstellung von Spaltrohren in einem einfachen und effizienten nicht möglich.

Es ist daher Aufgabe der vorliegenden Erfindung, ein einfaches, robustes und wirtschaftliches einstufiges Verfahren sowie eine entsprechende Vorrichtung zur Durchführung des Verfahrens bereitzustellen, das die nachteile des vorgenannten Standes der Technik überwindet, und bei dem hochbelastbare Kunststoffformteile mit Hohlprofil, insbesondere Spaltrohre für Pumpen, als integriertes Bauteil im Einstoffsystem einfaches und effizient hergestellt werden können.

Diese Aufgabe wird durch die Merkmale der Ansprüche 1 und 13 gelöst. Vorteilhafte Weiterbildungen der Efindung sind in den Unteransprüchen formuliert.

Erfindungsgemäß wird ein Verfahren und eine Vorrichtung zur Herstellung hochbelastbarer Kuriststoffformteile mit Hohlprofil, insbesondere Spaltrohre oder Spalttöpfe für Pumpen, in einem Formwerkzeug, mit einem ersten und einem zweiten Werkzeugteil vorgeschlagen, von denen zumindest ein Werkzeugteil zum Öffnen und Schließen des Formwerkzeugs relativ gegenüber dem anderen Werkzeugteil bewegbar ist bzw. bewegt wird, wobei in dem ersten Werkzeugteil ein länglicher Hohlraum ausgebildet ist, in den ein länglicher Formkern des zweiten Werkzeugteils koaxial unter Ausbildung einer dem Hohlprofil entsprechenden Kavität einführbar ist bzw. eingeführt wird, und wobei zunächst ein Verstärkungsmittel aus Endlosfasern auf den Formkern aufbringbar ist bzw. aufgebracht wird und das Formwerkzeug danach eine Öffnungs- oder Schließbewegung ausführen kann bzw. ausführt, während der durch eine oder eine Vielzahl sich entlang des Umfangs der Kavität erstreckende Anspritzöffnungen in radialer Richtung kontinuierlich eine das Verstärkungsmittel vollständig umschließende und durchdringende Kunststoffformmasse in die Kavität eingespritzt werden kann bzw. eingespritzt wird.

Mit diesem Verfahren, das auch als Profile In-Mould-Consolidation (pro IMC) bezeichnet werden kann, respektive der zur Ausführung des Verfahrens vorgeschlagenen Vorrichtung sind endlosfaserverstärkte, rohrförmige Hohlprofile herstellbar, wie sie besonders geeignet als Spaltrohre verwendet werden können. Das erste Werkzeugteil bildet mit seiner Innenwand des länglichen Hohlraumes die äußere Begrenzung der Kavität, so dass sich die Außenwand des hohlen Kunststoffformteils ausbildet, wohingegen der Formkern mit seiner äußeren Oberfläche die Kavität nach Innen begrenzt, so dass sich die Innenwand des Kunststoffformteils ausbildet. Der Formkern hat des Weiteren die Aufgabe, das Verstärkungsmittel aus Endlosfasern aufzunehmen und in Form und Lage zu halten. Das Verstärkungsmittel ist ein Faserhalbzeug und kann eine beliebige textile Darbietungsform aufweisen, beispielsweise ein Gelege, Geflecht oder Gewebe sein.

Durch das kreisförmige Einspritzen der Kunststoffformmasse in radialer Richtung werden die Fasern des Verstärkungsmittels vollständig mit Formmasse durchdrungen, so dass es in der Formmasse vollständig eingebettet wird. Ferner wird durch das radiale Einspitzen ein Verschieben des Verstärkungsmittels verhindert.

Dadurch, dass das Einspritzen der Formmasse durch eine oder eine Vielzahl sich entlang des Umfangs der Kavität erstreckende Anspritzöffnung bzw. Anspritzöffnungen erfolgt, wird der gesamte Querschnitt der Kavität gleichmäßig mit Formmasse gefüllt. Durch die fortgesetzte Bewegung eines der beiden Werkzeugteile wird die eingespritzte Formmasse von der Einspritzöffnung stetig weg bewegt. Es ergeben sich damit keine Bindenähte und sehr kurze Fließwege für die Formmasse, da sie nach Austritt aus der Anspritzöffnung als Weg lediglich die radiale Dicke des herzustellenden Kunststoffformteils fließen braucht. Dadurch können neben üblicherweise auf Spritzgussmaschinen verarbeitbaren thermoplastischen Kunststoffen auch Duroplaste, insbesondere hochmolekulare, zähfließende duroplastische Kunststoffe gespritzt werden. Ferner ermöglichen die kurzen Fließwege, dass der Einspritzdruck niedrig gewählt werden kann, so dass die Kunststoffformmasse besonders schonend und die Kavität gefüllt werden kann.

Durch die Steuerung des Schmeizeeinspritzvorgangs synchron zur Öffnungs- oder Schließbewegung des Formwerkzeugs, bei der die Einspritzöffnung und die Kavität relativ zueinander bewegt werden, kann die Produktion des Kunststoffformteils an einer Standardspritzgussmaschine realisiert werden. Es sei angemerkt, dass die Bewegungsrichtung der Öffnungsbewegung entgegengesetzt zur Bewegungsrichtung der Schließbewegung des Formwerkzeugs ist.

Aufgrund der sehr kurzen Fließwege kann als Kunststoffformmasse eine thermoplastische Formmasse verwendet werden. Diese zeichnen sich durch eine hohe Chemikalienbeständigkeit, hohe Temperaturbeständigkeit, große Festigkeit, große Steifigkeit, geringe Kriechneigung, flammhemmende Eigenschaft, geringe Feuchtigkeitsaufnahme, Sauerstoffbeständigkeit, gute elektrische Isolation, eine hohe Schmelzetemperatur, so dass eine dünnflüssige Schmelze möglich ist, und gute Wärmeleitfähigkeit aus, womit eine geringe Kühlzeit erreicht wird. Beispielsweise kann Polypropylen (PP) oder Polyphenylensulfid (PPS) als Kunststoffformmasse verwendet werden.

Bei der Schließbewegung des Formwerkzeugs kann entweder das erste Werkzeugteil gegenüber dem zweiten Werkzeugteil, das zweite Werkzeugteil gegenüber dem ersten Werkzeugteil oder beide Werkzeugteile zueinander beweglich sein. Vorzugsweise ist das erste Werkzeugteil stationär und das zweite Werkzeugteil beweglich ausgeführt, wobei der Formkern in den Hohlraum des ersten Werkzeugteils einführbar ist bzw. eingefahren wird.

Die Erfindungsgemäße Vorrichtung weist entweder eine einzige Anspritzöffnung auf, die sich entlang des gesamten Umfangs der Kavität erstreckt und damit einen Ringspalt bildet, in dem sich ein ringförmiger Bandanguss entsprechend der Querschnittsgeometrie des Hohlraumes oder des Formkerns ausbildet, wobei der sich ebenfalls ausbildende ringförmige Anschnitt mit der Bewegung über die gesamte axiale Länge des herzustellenden Kunststoffformteils geführt wird.

Die Angussform bei einem Bandanguss ist linienförmig. Dabei fließt die Schmelze durch einen flachen, länglichen Querschnitt in die Kavität. Die Linienform bedingt kürzere maximale Fließweg als beim Punktanguss. In der Praxis wir der Bandanguss oftmals beim Spritzgießen von plattenförmigen Bauteilen angewandt um die Molekülorientierung zu optimieren, dabei wird auf einer der Stirnseiten angespritzt. Für den Einsatz an dem Spaltrohr bieten ringförmige Bandangüsse vor allem den Vorteil, dass sich die maximalen Fließwege entlang des gesamten Umfangs verkürzen lassen. In einer Weiterbildung der Erfindung können auch mehrere Bandangüsse von Innen und/ oder von Außen vorgesehen sein.

Alternativ zu einem ringförmigen Bandanguss kann das Formwerkzeug eine Vielzahl sich entlang des Umfangs erstreckender Punktangüsse, auch Tunnelangüsse genannt, aufweisen, d.h. viele Anspritzpunkte, beispielsweise 12, 16, 20 oder 24, die gleichmäßig über den Umfang verteilt. Bei Punktangüssen fließt die Schmelze durch einen kleinen, kreisrunden Querschnitt in die Kavität. Dadurch entstehen am Bauteil allerdings Bindenähte in axialer Richtung, die für ein vorzeitiges Versagen mitverantwortlich sein können. Der maximale Fließweg beträgt bei großen Spaltrohrdimensionen bis zu 106 mm bei einem hohen Fließweg / Wanddickenverhältnis von ca. 82. Bei einer Optimierung der Fließweglänge und der Lage der Bindenähte kann durch eine hohe Anzahl an Punkangüssen, beispielsweise auf 12 oder 24 verbessert werden. Dadurch werden die Fließwege bis zum Aufeinandertreffen der Schmelzefronten verkürzt und es entstehen heißere Bindenähte, bei denen sich die Formmassenmoleküle besser verbinden.

Sowohl mit der einen sich entlang des Umfangs erstreckenden Anspritzöffnung respektive dem damit entstehenden ringförmigen Bandanguss, als auch mit der Vielzahl sich entlang des Umfangs erstreckenden Anspritzöffnungen respektive der damit entstehenden Vielzahl gleichmäßig umfänglich verteilter Punktangüsse, entsteht eine gleichmäßig verteilte Angusszone um das Profil. Der Fließweg wird durch die radiale Anspritzrichtung auf die Wandstärke des zu erstellenden Formteils reduziert.

Vorzugsweise kann der Formkern die Anspritzöffnung oder Anspritzöffnungen aufweisen. Dies bedeutet, dass die Kunststoffformmasse radial nach Außen in die Kavität eingespritzt wird, so dass der Anguss auf der Innenseite des herzustellenden Formteils liegt.

Alternativ oder in Kombination kann das erste Werkzeugteil die Anspritzöffnung oder Anspritzöffnungen oder eine oder mehrere weitere Anspritzöffnungen aufweisen. Dies bedeutet, dass die Kunststoffformmasse radial nach Innen in die Kavität eingespritzt wird, so dass der Anguss auf der Außenseite des herzustellenden Formteils liegt. Da bei einem Spaltrohr, die Innenseite eine hohe Oberflächenqualität aufweisen sollte, und Flächen mit Anguss eine schlechtere Oberflächenqualität aufweisen, ist das Anspritzen von Außen, d.h. vom ersten Werkzeugteil aus bei der Herstellung von Spaltrohren zu bevorzugen.

Vorzugsweise kann das Formwerkzeug eine Verteilerkammer für Formmasse aufweisen, aus der die eine Anspritzöffnung oder die Anspritzöffnungen gespeist werden, bzw. werden können. Hierfür kann die Anspritzöffnung über einen Ringkanal oder die Vielzahl Anspritzöffnungen über Einzelkanäle mit der Verteilerkammer in Verbindung stehen. Da die zu spritzende Formmasse mit einem gewissen Druck in die Kavität gelangt, sorgt die Verteilerkammer für einen Druckausgleich, d.h. eine gleichmäßige Druckverteilung über die Anspritzöffnung bzw. Öffnungen. Die Verteilerkammer kann vorzugsweise ringförmig ausgebildet sein, so dass der Abstand zwischen Verteilerkammer und Anspritzöffnung stets gleich ist. Dies gewährleistet, dass auch die Temperatur der Formmasse beim Austritt aus der bzw. den Anspritzöffnungen entlang des Umfangs im Wesentlichen gleich ist. Vorzugsweise ist die Verteilerkammer der Anspritzöffnung bzw. -öffnungen unmittelbar vorgelagert.

Als Verstärkungsmittel kann beispielsweise ein Gewebeschlauch oder ein Wickel verwendet werden, der über den Formkern gestülpt wird. Dies ermöglicht auf besonders einfachem Wege eine Fixierung des Verstärkungsmittels in der Kavität. Alternativ können auch vorimprägnierte Rovings aus Endlosfasern auf den Formkern gewickelt werden. Für einen besonders stabilen Faserverbund können bevorzugt Kohle- oder Glasfasern bei dem Verstärkungsmittel verwendet werden. Um das Verstärkungsmittel zusätzlich zu fixieren und damit des Weiteren ein guter Verbund zwischen Formmassenmatrix und Fasern hergestellt wird, kann das Halbzeug als Hybridgran mit aufschmelzbaren Polymerfasern zwischen den Endlosfasern ausgeführt sein. Derartige Polymerfasern können aus PP oder PPS sein, so dass sie schmelzen, wenn die heiße Kunststoffschmelze die Fasern durchdringt. Ein Aufschmelzen kann auch dadurch erreicht werden, dass der Formkern auf die Schmelztemperatur aufgeheizt wird. Auf diese Weise kann das Verstärkungsmittel vor dem Einspritzen der Kunststoffformmasse vorkonsolidiert und damit auf dem Formkern fixiert werden.

Vorzugsweise kann sich das Verstärkungsmittel entlang der gesamten axialen Länge des Formkerns erstrecken. Dies verhindert insbesondere hinsichtlich der Herstellung von Spaltrohren, dass sich faserunverstärkte Stellen in dem Formteil ausbilden, die eine erhöhte Bruchgefahr bedeuten.

Nach dem Einspritzen der Formmasse in die Kavität ist es vorteilhaft, diese im Formwerkzeug zu temperieren. Die Temperierung kann dabei ein Kühlen beim Spritzen von thermoplastischen Kunststoffen oder eine erwärmen im Falle von duroplastischen Kunststoffen sein. Hierdurch wird zum einen eine kürzere Zykluszeit bei der Herstellung der Formteile erreicht und zum anderen die Oberflächengüte verbessert.

Da eine thermoplastische Kunststoffformasse beim Abkühlen schwindet, ist ihre Verbindung zum Formkern stärker als zum ersten Werkzeugteil, so dass der Wärmeübergang zwischen Formmasse und Formkern besser ist. Vorzugsweise kann daher die Temperierung durch den Formkern erfolgen.

Beispielsweise kann die eingespritzte Formmasse bei der Öffnungs- oder Schließbewegung an einer Temperiereinrichtung des Formwerkzeugs vorbeigeführt werden. Alternativ oder in Kombination kann auch die oder eine Temperiereinrichtung des Formwerkzeugs an der eingespritzten Formmasse vorbeigeführt werden. Die Temperiereinrichtung kann hierbei gegenüber und/oder neben der Anspritzöffnung/ den Anspritzöffnungen angeordnet sein. Hierdurch wird für das Temperieren kein zusätzlicher Prozessschritt benötigt. Vielmehr wird das Temperieren unmittelbar in den Herstellungsprozess integriert.

In einer bevorzugten Weiterbildung der Erfindung kann das hergestellte Kunststoffformteil bei der Öffnungsbewegung von dem Formkern automatisch abgestreift werden. Dies verhindert, dass ein manueller Eingriff oder ein zusätzlicher Prozessschritt benötigt wird. Das Abstreifen kann durch eine auf dem Formkern angeordnete Abstreifhülse oder durch eine den Formkern umschließende Dichtplatte erfolgen, zu der sich der Formkern relativ koaxial bewegt.

Die Dichtplatte ist dabei zwischen dem ersten und dem zweiten Werkzeugteil angeordnet, und dichtet die Kavität an der Öffnung des Hohlraumes ab. Vorzugsweise kann die Abstreifhülse einstückig mit der Dichtplatte ausgebildet sein. Zur Abdichtung der Kavität auf der gegenüberliegenden Stirnseite des Formkerns kann eine weitere Dichtplatte vorgesehen sein, die an dem stirnseitigen Ende des Formkerns anliegt. Damit wird die Dichtplatte bei der Bewegung des Formkerns mitbewegt. Die weitere Dichtplatte kann beispielsweise durch die Kraft einer Druckfeder gegen die Stirnseite gedrückt werden, um die Dichtwirkung zu erhalten.

Für die Ausbildung eines Spalttopfes kann die Bewegung die Dichtplatte 12 bei der Öffnungsbewegung bei Erreichen der Anspritzöffnung gestoppt werden, wobei sich sich der Formkern geringfügig weiterbewegt, so dass sich zwischen Dichtplatte 12 und Stirnseite des Formkerns ein Abstand bildet, der zur Ausbildung eines Spaltrohrbodens mit Kunststoffformmasse gefüllt wird.

Das erste Werkzeugteil und/oder die zwischen dem ersten und dem zweiten Werkzeugteil angeordnete Dichtplatte kann eine scheibenförmige oder tellerförmige, die Öffnung des Hohlraums umgebende Vertiefung zur Ausbildung eines Kragens an dem Kunststoffformteil aufweisen. Die Vertiefung erstreckt sich dabei radial nach außen. Sie kann vor dem Beginn oder am Ende der Verfahrbewegung, d.h bei stehendem Werkzeugteil mit Kunststoffformmasse gefüllt werden. Der Bewegungsvorgang wird dann unmittelbar begonnen, wenn die Vertiefung mit Kunststoffformmasse gefüllt ist. Alternativ wird der Einspritzvorgang nach dem Bewegungsende fortgesetzt.

Für die Herstellung von außen zylindrischen Hohlprofilen kann der Hohlraum im ersten Werkzeugteil zylindrisch ausgebildet sein, so dass das herzustellende Formteil einen zylindrischen Außenquerschnitt erhält. Der Innenquerschnitt kann demgegenüber beliebig ausgebildet sein. Alternativ kann der Formkern zylindrisch ausgebildet sein, so dass das herzustellende Formteil einen zylindrischen Innenquerschnitt erhält. Für die Herstellung von Spaltrohren ist des Weiteren ein zylindrischer Hohlraum und ein zylindrischer Faserkern nötig und kann erfindungsgemäß vorgesehen werden. Alternativ können Hohlreum und/ oder Formkern leicht konisch ausgebildet sein.

Der Abstand zwischen der Außenmantelfläche des Formkerns und der Innenfläche des ersten Werkzeugteils in radialer Richtung entspricht gerade der Dicke des herzustellenden Formteils. Für Spaltrohre kann dieser Abstand bevorzugt zwischen 0,5 Millimeter und 2 Millimeter, insbesondere 1 Millimeter und 1,5 Millimeter betragen.

In einer besonderen Ausführungsvariante des erfindungsgemäßen Formwerkzeugs weist dieses eine Vorkammer für ein zur Hergtellung des Formteils vorgesehenes Reservoir an Formmasse auf, wobei durch die Bewegung eines der Werkzeugteile, insbesondere des Formkerns, ein Druck in der Vorkammer aufbaubar ist bzw. aufgebaut wird, der die Formmasse zur Anspritzöffnung bzw. zu den Anspritzöffnungen drückt. Hierdurch wird automatisch synchron zur Öffnungs- oder Schließbewegung Formmasse in die Kavität eingespritzt. Die Vorkammer ist dabei in demjenigen Werkzeugteil vorgesehen, in dem auch die Anspritzöffnung bzw. Anspritzöffnungen vorgesehen sind.

Beispielsweis kann die Vorkammer in dem ersten Werkzeugteil vorgesehen sein. In diesem Fall kann beispielsweise ein mit dem Formkern in Verbindung stehender Kolben in die Vorkammer einführbar sein, so dass dieser bei einer Schließbewegung des Formkerns zunehmend in die Vorkammer hineingedrückt wird und dort Formmasse verdrängt. Alternativ kann die Vorkammer auch in dem Formkern oder dem zweiten Werkzeugteil vorgesehen werden, wobei ein entsprechend stationär ausgebildeter, mit dem ersten Werkzeugteil verbundener Kolben in die sich mit dem Formkern bewegende Vorkammer mit der Bewegung zunehmend hineingeschoben wird.

In einer weiteren Ausführungsvariante kann das Formwerkzeug mehr als zwei Werkzeugteile aufweisen. So kann beispielsweise ein 3-Plattenwerkzeug vorgesehen werden, bei dem die bewegliche Werkzeugseite zweiteilig aufgebaut ist, d.h. der Formkern aus zwei bewegbaren Teilen besteht.

Für die Zuführung der Kunststoffformmasse weist das Formwerkzeug einen Plastifizierzylinder mit einer Schnecke auf, die die Formmasse in eine Leitung drückt, über die die Formmasse sie in die Verteilerkammer gelangt. Erfindungsgemäß kann der Plastifizierzylinder derart angeordnet werden, dass seine Längsachse koaxial zur Bewegungsrichtung des beweglichen Werkzeugteils angeordnet ist. Die Zuführöffnung liegt dabei ebenfalls auf der Längsachse, so dass die Formmasse in die Richtung der Verfahrbewegung in das Formwerkzeug eingebracht wird. Dies bewirkt, dass die Fließwege vom Plastifizierzylinder zur Anspritzöffnung bzw. zu den Anspritzöffnungen symmetrisch in Bezug auf die Bewegungsachse sind und damit stets die gleiche Länge besitzen. Damit ergibt sich ferner eine gleichmäßige Druckverteilung der Formmasse entlang des Umfangs der Kavität.

Weitere Merkmale, Eigenschaften und Vorteile des erfindungsgemäßen Verfahrens, respektive des damit hergestellten Erzeugnisses sowie der zur Durchführung des Verfahrens besonders geeigneten Vorrichtung, werden nachfolgend anhand von Ausführungsbeispielen und den beigefügten Figuren näher erläutert.

Die Figuren zeigen schematische Darstellungen erfindungsgemäßer Formwerkzeuge zur Herstellung eines Spaltrohres im Querschnitt. Gleiche Bezugszeichen bedeuten dabei gleiche Funktionselemente. Dabei zeigt im Einzelnen
- Figur 1:: ein Formwerkzeug mit Vorkammer und außenseitiger Anspritzung beim Schließen des Formwerkzeugs
- Figur 2:: ein Formwerkzeug mit innenseitiger Anspritzung beim Öffnen des Formwerkzeugs und Kühlung von Außen
- Figur 3:: ein Formwerkzeug mit innenseitiger Anspritzung beim Öffnen des Formwerkzeugs und Kühlung von Innen
- Figur 4:: ein Formwerkzeug mit außenseitiger Anspritzung beim Öffnen des Formwerkzeugs und Kühlung von Innen
- Figur 5:: ein Formwerkzeug mit außenseitiger Anspritzung beim Öffnen des Formwerkzeugs und Kühlung von Innen und Außen
- Figur 6:: rechtwinklige Anordnung der beiden Faserlagen parallel zu den auftretenden Kräften
- Figur 7:: kreuzweise Wicklung der beiden Faserlagen
- Figur 8:: tangentiale Anordnung der beiden Faserlagen parallel zur Hauptkraft
- Figur 9:: Hergestellter Spalttopf mit Kragen

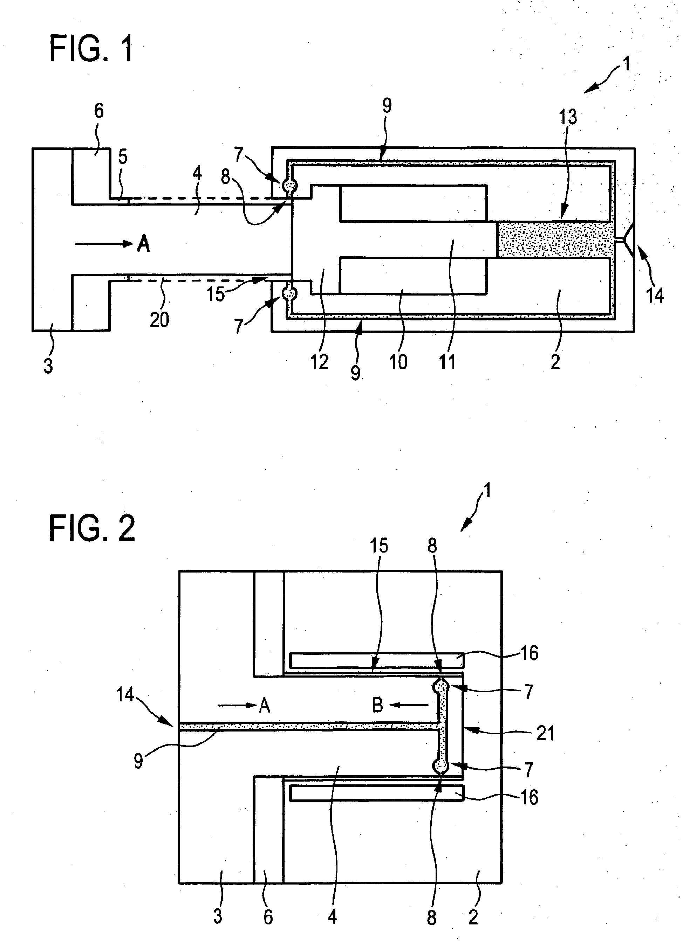

Figur 1 zeigt einen Teil einer Vorrichtung zur Herstellung hochbelastbarer Kunststoffformteile mit Hohlprofil, insbesondere Spaltrohre 25 oder Spalttöpfe 25 für Pumpen. Von der Vorrichtung ist ein geöffnetes Formwerkzeug 1 dargestellt, das ein erstes Werkzeugteil 2 und ein zweites Werkzeugteil 3 umfasst. Bei diesem und den anderen in den Figuren dargestellten Formwerkzeugen ist das zweite Werkzeugteil 3 zum Öffnen und Schließen des Formwerkzeugs 1 relativ gegenüber dem ersten Werkzeugteil 2 beweglich. In dem ersten Werkzeugteil 2 ist ein länglicher Hohlraum 10 ausgebildet, in den ein länglicher Formkern 4 des zweiten Werkzeugteils 3 koaxial unter Ausbildung einer dem Hohlprofil entsprechenden Kavität 15 einführbar ist. Der Formkern 4 ist Bestandteil des zweiten Werkzeugteils 3, d.h. mit diesem fest verbunden oder einstückig ausgebildet. Das erste Werkzeugteil 2 bildet eine feststehende Werkzeughälfte und das zweite Werkzugteil 3 eine bewegliche Werkzeughälfte. Bei diesem Konzept ergibt sich aus der Anordnung des Kerns für das becher- beziehungsweise röhrenförmige Formteil auf der beweglichen Werkzeughälfte ein deutlich einfacherer Aufbau als bei einer umgekehrten Anordnung.

Auf den Formkern 4 ist als Verstärkungsmittel 20 ein Gewebeschlauch mit Endlosfasern aus Glasfasern oder Kohlenstofffasern aufgebracht, der dem herzustellenden Kunststoffformteil eine hohe Festigkeit verleiht. Der Gewebeschlauch ist durch die gestrichelten Linien angedeutet. Bei einem Gewebeschlauch handelt es sich um ein schlauchförmig versponnenes Gewebe. Diese Schläuche sind sowohl aus Glas- wie auch als Kohlenstofffasern im Handel erhältlich. Bei einer Stauchung oder Streckung des Schlauchs ändert sich sowohl dessen Durchmesser als auch der Faserwinkel. Dadurch lässt sich der Faserwinkel der beiden Flechtstränge den Bedürfnissen am Formteil optimal anpassen und der Schlauch auf einfache Weise eng am Formkern 4 anliegend einlegen.

Alternativ zum Gewebeschlauch kann auch ein Wickeln eines Vorformlings aus vorimprägnierten Faserrovings auf den Formkern 4 oder einen anderen Kern erfolgen. Bei dieser Vorgehensweise werden in einem zusätzlichen Arbeitsgang außerhalb des Spritzgießwerkzeugs die mit dem Matrixmaterial vermischten Rovings auf einen den Formkern 4 gewickelt. Hierbei sind zwei Arten dieser vorimprägnierten Rovings im Handel erhältlich. Es können mit Matrixmaterial in Pulverform imprägnierte Rovings sowie Faserrovings, die neben den Verstärkungsfasern auch Fasern aus Matrixmaterial enthalten, die miteinander versponnen sind (Commingling), erworben werden. Die Rovings werden dabei um den Formkern 4 gewickelt und anschließend auf diesem Kern, beispielsweise in einem Ofen, drucklos erwärmt. Dabei schmilzt das Matrixmaterial zumindest teilweise auf. Nach dem Abkühlen liegt ein teilweise konsolidierter Vorformling vor, welcher das weitere Handling erleichtert, da er schon eine gewisse Formstabilität besitzt. Alternativ können die Roving auch bereits beim Wickeln erwärmt werden, z. B. durch Infrarotstrahlung, eine Gasflamme oder den beheizten Formkern, um die thermoplastische Matrix aufzuschmelzen. Auf diese Weise lassen sich die Rovings besser drapieren. Der auf diese Weise gefertigte formstabile Vorformling kann in das Werkzeug eingelegt werden. Für die Erwärmung kann der Formkern 4 im einfachsten Fall vor oder nach dem Bewickeln aufgeheizt werden, so dass durch Wärmeübertragung die Matrix bei Kontakt aufgeschmolzen wird. Nach dem Bewickeln kühlen der Formkern 4 und der Vorformling gemeinsam ab und können getrennt werden. Der größte Vorteil dieser Vorgehensweise besteht in der Möglichkeit, einen formstabilen Vorformling herzustellen, der automatisiert in das Spritzgießwerkzeug eingelegt werden kann. Wir der Vorformling direkt auf den Formkern des Spritzgießwerkzeugs 1 gewickelt, kann ein weiterer Fertigungsschritt eingespart werden. Außerdem lässt sich die Faserorientierung nach Bedarf an die Belastungen anpassen.

Der Hohlraum 10 und der Formkern 4 sind zylindrisch ausgebildet, wobei der Außendurchmesser des Formkerns 4 derart kleiner ist gegenüber dem Innendurchmesser des vorderen Bereichs des Hohlraumes 10, dass zwischen dem Formkern 4 und dem ersten Werkzeugteils 2 im vorderen Bereich ein Abstand gebildet ist, der der Dicke des herzustellenden Spaltrohes 25 entspricht.

Das erste Werkzeugteil 2 weist im vorderen Bereich des Hohlraumes 10 eine ringförmige, sich in Umfangsrichtung der Kavität 15 erstreckende Anspritzöffnung 8 auf, durch die in radialer Richtung nach Innen kontinuierlich eine das Verstärkungsmittel 20 vollständig umschließende Kunststoffformmasse in die Kavität 15 eingespritzt werden kann. Die Anspritzöffnung 8 wird durch einen Ringspalt 17 gebildet, der auf der Innenwand des Hohlraumes 10 liegt, so dass die Kunststoffformmasse von Außen in die Kavität 15 eingespritzt wird. Der Anspritzöffnung 8 unmittelbar vorgelagert ist eine ringförmige Verteilerkammer 7, in der ein Reservoir an Formmasse gehalten wird. Von der Verteilerkammer 7 wird der Ringspalt über den gesamten Umfang gleichmäßig mit Formmasse beaufschlagt. Die Kunststoffformmasse fließt über zwei symmetrisch in dem zweiten Werkzeugteil 2 vorgesehene Zuleitungen 9 zu der Verteilerkammer 7. In einer nicht dargestellten Ausführungsvariante können auch weitere Zuleitungen vorgesehen sein. Die Zuleitungen 9 münden in einer Vorkammer 13, in der die zu spritzende Kunststoffschmelze vorgehalten wird. Die Vorkammer 13 wird über eine Zuführöffnung 14 von einem Plastifizierzylinder 26 mit einer Schnecke mit Formmasse befüllt. Die Schnecke drückt die Formmasse in die Leitung 9, über die die Formmasse in die Verteilerkammer 7 gelangt. Der Plastifizierzylinder 26 ist derart angeordnet, dass seine Längsachse koaxial zur Bewegungsrichtung des Formkerns 4 liegt. Die Zuführöffnung 14 liegt dabei ebenfalls auf der Längsachse und der Bewegungsachse, so dass die Formmasse in die Richtung der Verfahrbewegung in das Formwerkzeug 1 eingebracht wird. Damit sind die Fließwege stets gleich lang, und es ergibt sich eine gleichmäßige Druckverteilung der Formmasse entlang des Umfangs der Kavität 15.

In der Vorkammer 13 liegt ein Ende eines verschiebbar gelagerten Kolbens 11 ein, dessen anderes Ende sich mit einer Dichtplatte 12 an der Stirnseite des Formkerns 4 abstützt. Durch die Schließbewegung des Formwerkzeugs 1, insbesondere durch die axiale Bewegung des Formkerns 4 in den länglichen Hohlraum 10 wird der Kolben zunehmend in die Vorkammer 13 hineingedrückt und verdrängt dort die Kunststoffschmelze. Diese wird über die Zuleitungen 9 zur Verteilerkammer 7 und von dort über den Ringspalt 17 aus der Anspritzöffnung 8 in die Kavität 15, d.h. unter Ausübung eines Pressdruck senkrecht zur Wand des herzustellenden Formteils auf den Formkern 4 gespritzt, während sich der Formkern 4 an der Anspritzöffnung 8 in Richtung des Hohlraumes 10 vorbeibewegt und die gespritzte, langsam erstarrende Formmasse von der Anspritzöffnung 8 mitnimmt. Das Volumen der Vorkammer 13 entspricht dem Volumen des zu spritzenden Kunststoffformteils abzüglich des Volumens des Verstärkungsmittels 20. Durch die fortgesetzte Bewegung des Formkerns 4 wird folglich Kunststoffformmasse kontinuierlich auf den Formkern 4 aufgetragen. Damit wird die Kavität 15 an der Anspritzöffnung vorbei bewegt und gibt so noch nicht gefüllte Bereiche für den nachfließenden Kunststoff frei.

Im geschlossen Zustand des Formwerkzeugs 1 liegt zwischen dem ersten Werkzeugteil 2 und dem zweiten Werkzeugteil 3 eine Dichtplatte 6, die die Öffnung des Hohlraumes 10 axial dichtend verschließt. Die Dichtplatte 6 weist eine zentrale Ausnehmung auf, durch die der Formkern 4 geführt ist. Der Formkern liegt in dieser Ausnehmung der Dichtplatte 6 ein. Ebenfalls auf dem Formkern 4 angeordnet und einstückig mit der Dichtplatte 6 ausgebildet ist eine Abstreifhülse 5. Mittels der Abstreifhülse 5 kann bei feststehender Dichtplatte 6 und sich in Richtung von dem ersten Werkzeugteil 2 wegbewegendem Formkern 4, das hergestellte Kunststoffformteil von dem Formkern 4 abgestreift werden.

Der Dichtplatte 6 gegenüberliegend ist die Dichtplatte 12 angeordnet. Er dient dazu, die Kavität abzudichten und damit deren Form und Größe konstant zu halten, während sich die feste Werkzeughälfte beim Einspritzvorgang relativ zur Kavität bewegt. Außerdem besteht durch dieses Element die Möglichkeit an der Angussseite des Formteils bei der geometrischen Gestaltung vom konstanten Innendurchmesser, der durch den Kern vorgegeben ist, abzuweichen etwa um Fasen zur Dichtungsmontage vorzusehen. Außerdem ist es möglich, durch eine entsprechende Gestaltung einen Boden 23 an den rohrförmigen Teil 22 des Spaltrohres 25 anzuformen und somit einen Spalttopf 25 herzustellen.

Der Grundgedanke hinter diesem Werkzeugkonzept nach Figur 1 liegt in der Möglichkeit begründet, dass die für die Bewegung der Kavität nötige Werkzeugbewegung zum Aufbringen des Einspritzdrucks, wie beim ITM (Injection Transfer Moulding) -Verfahren genutzt werden kann. Der Hauptvorteil liegt in dem geringen Einspritzdruck der Maschine, der hier benötigt wird. Demgegenüber sind Prozessparameter wie Einspritzvolumen, Einspritzdruck oder Nachdruck schwer vorgebbar, was die Einstellung für einen robusten Prozessablaufs erschwert. Die Steuerung der Parameter kann nur durch mechanische Verstellung am Formwerkzeug 1 und durch Veränderungen der Schließkraft erfolgen.

Bei den Werkzeugkonzepten nach Figuren 2 bis 5 wird auf das Vorkammerprinzip verzichtet und der Einspritzdruck durch die Schnecke der Vorrichtung aufgebaut und über die Zuführung 14 dem Formwerkzeug bereitgestellt. Auch bei den Ausführungsvarianten nach Figuren 2 bis 5 wird ein ringförmiger Bandanguss und eine Einspritzrichtung senkrecht zur Bauteilwandung verwendet. Sie unterscheiden sich in der Lage des Angusses, der auf der Formteilaußenseite oder Formteilinnenseite liegen kann, durch die Lage der Kühlzonen im Kern und/oder an der Außenseite der Kavität 15 und darin, ob der Einspritzvorgang während der Öffnungs- oder Schließbewegung durchgeführt wird.

Figur 2 zeigt ein Formwerkzeug 1 einer erfindungsgemäßen Ausführungsvariante der Vorrichtung, bei der das Anspritzen Innen beim Öffnen in Öffnungsrichtung B erfolgt, wobei eine Kühlung Außen vorgesehen ist.

Das Formwerkzeug 1 ist im geschlossen Zustand dargestellt, wobei der Formkern 4 zuvor in Schließrichtung A in den Hohlraum des ersten Werkzeugteils 2 hineinbewegt wurde. Hohlraum 10 und Formkern 4 sind zylindrisch ausgebildet. Die Stirnseite des Formkerns 4 liegt dabei am Boden 21 des Hohlraums 10 bündig an. Zwischen dem ersten Werkzeugteil 2 und dem zweiten Werkzeugteil 3 liegt die Dichtplatte 6, die die Kavität 15 in Öffnungsrichtung B begrenzt. Die Dichtplatte 6 liegt formschlüssig auf dem dem stirnseitigen Ende gegenüberliegenden Ende des Formkerns 4 auf, so dass durch eine Relativbewegung der Dichtplatte 6 zum stirnseitigen Ende des Formkerns, das hergestellte Kunststoffformteil vom Formkern 4 abgestreift wird.

In dieser Ausführungsvariante ist die Anspritzöffnung 8 im Formkern vorgesehen, so dass die Formmasse in radialer Richtung nach Außen gespritzt wird. Damit liegt der Anschnitt bei dem herzustellenden Formteil Innen. Die Anspritzöffnung 8 erstreckt sich ringförmig entlang des gesamten Umfangs des Formkerns 4 und bildet einen Ringspalt. Dieser wird aus einer ringförmigen Verteilerkammer 7 mit Kunststoffschmelze gespeist. In die Verteilerkammer 7 münden mindestens 2 symmetrisch angeordnete Schmelzekanäle 9, die sich von der radialen Mitte radial nach Außen erstrecken. In einer nicht dargestellten Ausführungsvariante können mehrere derartiger Kanäle sternförmig von der Mitte radial nach Außen verlaufen. Zu dem Konvergenzpunkt der radialen Schmelzekanäle ist ein axialer Schmelzekanal 9 geführt, der sich entlang der Längsachse des Formkerns 4 erstreckt und von einer Schmelzezuführungspunkt 14 aus einer nicht dargestellten Schnecke mit Formmasse gespeist wird.

Bei der Herstellung eines Formteils wird der auf den Formkern 4 ein nicht dargestelltes Verstärkungsmittel 20, vergleiche Figur 1, mit Endlosfasern aufgebracht und das Formwerkzeug 1 anschließend geschlossen. Gleichzeitig zu der Öffnungsbewegung in Richtung B wird die Kunststoffschmelze kontinuierlich vom Formkern aus in Formteildickenrichtung gespritzt. Bei diesem Konzept erfolgt der Einspritzvorgang während einer teilweisen Öffnung des Formwerkzeugs1 je nach gewünschter axialer Länge des herzustellenden Formteils. Die Abdichtplatte 6 bewegt sich während des Öffnungsvorgangs nicht. Die Schmelze durchdringt das Verstärkungsmittel 20 und bildet so einen festen Verbund im Einstoffsystem. Eine Temperiereinrichtung 16 im ersten Werkzeugteil 2 umgibt die Kavität 15 derart, dass das eingespritzte Kunststoffformmasse im Falle einer thermoplastischen Matrix abgekühlt und im Falle einer duroplastischen Matrix erwärmt werden kann.

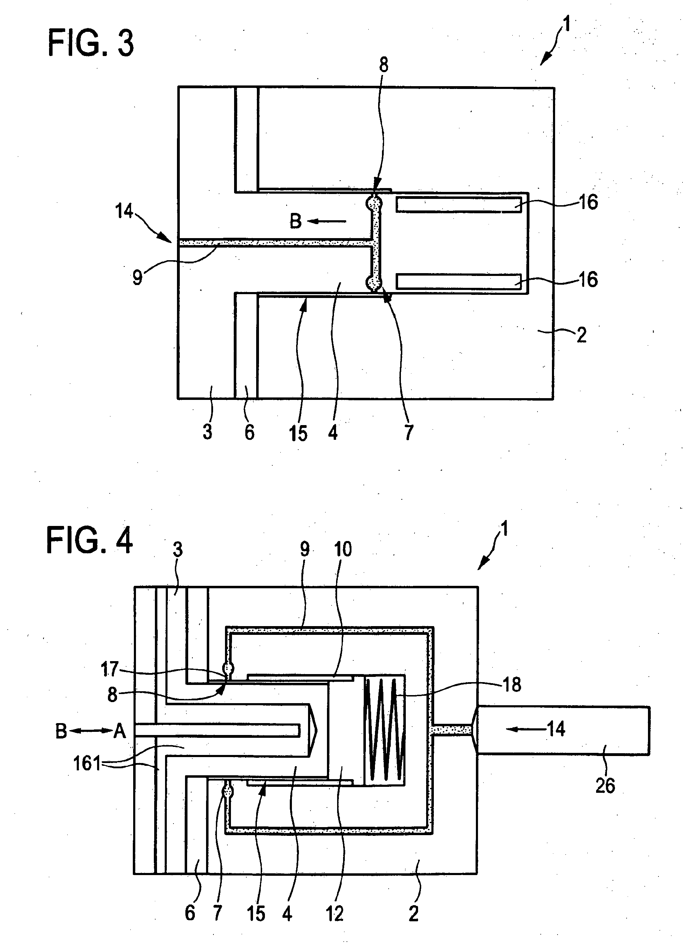

Figur 3 zeigt ein Formwerkzeug 1, bei dem gegenüber der Ausführungsvariante nach Figur 2 eine Kühlung von Innen erfolgt. Um den Nachteil hinsichtlich der Kühlung beim vorgenannten Konzept nach Figur 2 zu vermeiden, ist daher in Figur 3 eine Kühlung im Formkern 4 vorgesehen. Zudem entsteht durch die Kühlung an der Formteilinnenseite, die sich relativ zum Kern bewegt, eine Kalibrierung des Formteils, welche mit der Innenkalibrierung bei der Extrusion vergleichbar ist. Dadurch wird die Oberflächenqualität an der Bauteilinnenseite verbessert. Eine derartige schnelle Abkühlung des Materials an der Einspritzzone verbessert die Oberflächengüte in diesem Bereich. Auch bei diesem Konzept erfolgt der Einspritzvorgang während einer teilweisen Öffnung des Formwerkzeugs 1. Die Anspritzöffnung 8 und damit der ringförmige Bandanguss wird entlang der Kavität 15 bewegt, deren Volumen fix ist. Die Funktionsweise des Werkzeugkonzepts ergibt sich aus Figur 3.

Der Formkern 4 ist lang und schlank ausgebildet. Die Temperiereinrichtung 16 ist hier Teil des Formkerns 4. Dies ist im Falle einer Kühlung günstiger, da durch die Schwindung des Formteils beim Abkühlen der Kontakt des Bauteils zur Innenseite intensiver ist. Die Temperiereinrichtung 16 ist zwischen seiner Stirnseite und der Anspritzöffnung 8 angeordnet, so dass die Temperiereinrichtung 16 nach dem Einspritzen der Formmasse über diese bewegt wird. In einer nicht dargestellten Ausführungsvariante liegt die Temperiereinrichtung 16 zwischen der Anspritzöffnung 8 und dem der Stirnseitige gegenüberliegenden Ende des Formkerns 4, wobei das Einspritzen beim Schließvorgang erfolgt und die Temperiereinrichtung 16 nach dem Einspritzen über die Formmasse bewegt wird.

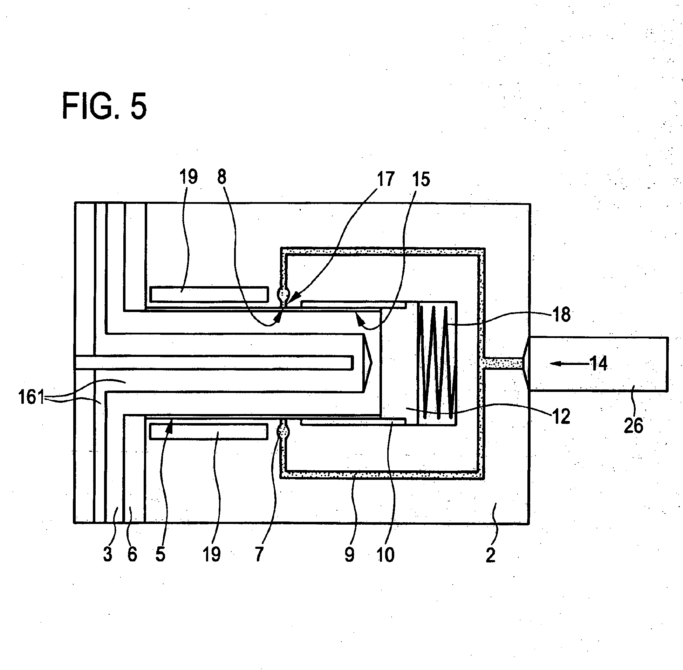

Figuren 4 und 5 zeigen Werkzeugkonzepte, bei denen das Anspritzen außen erfolgt. Dies hat zum einen den Vorteil, dass die Oberflächenqualität auf der Innenseite de herzustellenden Formteils verbessert wird, was insbesondere bei Spalttöpfen 25 gefordert ist. Denn es gibt es einen deutlichen Unterschied hinsichtlich der Oberflächenqualität zwischen den Oberflächen, an denen angespritzt wurde und den übrigen Formteiloberflächen. Während die übrigen Flächen auf dem Niveau von Standardspritzgießteilen liegen, weisen die Angussflächen eine deutlich höhere Rauheit auf. Zudem liegen Markierungen am Beginn und Ende des Verfahrwegs vor. Folglich führt das Anspritzen aus Richtung des Formkerns 4 zu einer schlechteren Oberfläche an der Innenseite des Spaltrohres 25. Ein Spaltrohr 25 sollte jedoch an der Innenseite eine hochwertige Oberfläche aufweisen, wohingegen die Oberflächenqualität der Außenseite weitaus weniger von Bedeutung ist. Aus diesem Grunde ist für die Herstellung von Spaltrohren 25 ein Anspritzen Außen vorteilhaft.

Zum anderen hat ein Anspritzen von außen den Vorteil, dass Formteile mit vielfältigeren Geometrien herstellbar sind, da bei der Einspritzung von Innen ein konstanter Innenquerschnitt über das gesamte Formteil vorhanden sein muss, was unter anderem die Fertigung eines Spalttopfes 25, wegen des anzuformenden Bodens 23, oder das Einarbeiten von Phasen an der Innenseite zur Montageerleichterung verhindert.

Wie bei der Ausführungsvariante gemäß Figur 1, weist daher auch das Formwerkzeug 1 nach Figuren 4 und 5 eine als Ringkanal 17 ausgebildete Anspritzöffnung 8, eine ringförmige Verteilerkammer 7 und Zuführleitungen 9 im ersten Werkzeugteil 2 auf. Die Kunststoffschmelze wird radial nach Innen in die Kavität 15 eingespritzt. Die Anspritzöffnung 8 ist im vorderen Bereich des ersten Werkzeugteils 2 vorgesehen. Das Einspritzen der Formmasse kann sowohl beim Öffnungsvorgang in Richtung B als auch beim Schließvorgang in Richtung A erfolgen. Für den letzteren Fall ist die Abdichtplatte 6 fest vor dem ersten Werkzeugteil angeordnet. Im Falle des Einspritzens der Formmasse beim Öffnen bewegt sich die Abdichtplatte 6 mit dem zweiten Werkzeugteil 3 vom ersten Werkzeugteil 2 weg. Diese Variante hat den Vorteil, dass ein Boden 23 an den rohrförmigen Teil 22 des Spaltrohrs 25 angeformt werden kann, wie nachfolgend noch erläutert wird.

Die Temperierung erfolgt bei dem Formwerkzeug nach Figuren 4 und 5 vom Formkern 4 aus. Hierzu sind in ihm mit Flüssigkeit durchflossene Kanäle 161 vorhanden.

Im Gegensatz zu den Konzepten mit einem Angusssystem im Formkern 4 verbleibt das Formteil während der Fertigung an seiner Stelle auf dem Formkern 4. Durch die Anspritzung von der Außenseite ergibt sich eine gute Oberfläche an der Formteilinnenseite. Eine schlechtere Oberfläche an der Außenseite ist bei Spaltrohren 25 unkritisch. Bei einer Erweiterung des Werkzeugkonzepts zur Herstellung des Spalttopfes 25, d.h. mit einem Flansch und einem geschlossenes Ende anstatt eines beidseitig offenen Spaltrohres 25, ergeben sich größere geometrische Freiheiten, die die Anformung eines Becherbodens und eines Flansches ermöglichen. Um auch im Bereich des Flansches eine Füllung mit kurzen Fließwegen zu erreichen, kann dieser vor dem Spritzen des Rohrkörpers durch den Einsatz einer kaskadierenden Einspritzung eigenständig gefüllt werden.

Das in Figur 5 dargestellte Formwerkzeug 1 unterscheidet sich gegenüber dem Formwergzeug 1 nach Figur 4 in einer zusätzliche Temperierung 19, die im ersten Werkzeugteil 2, d.h. außenseitig der Kavität 15 und damit des herzustellenden Formteils angeordnet. Die Temperiereinrichtung 19 ist zwischen der Anspritzöffnung 8 und dem vorderen Ende des ersten Werkzeugteils 2 angeordnet und bildet eine zusätzliche Kühlzone, so dass bei einem Einspritzen der Formmasse beim Öffnungsvorgang diese an der Temperiereinrichtung 19 vorbeibewegt wird. Die Abdichtplatte 6 und die damit einstückig verbundene Abstreifhülse 5 bewegen sich bei der Öffnung des Formwerkzeugs 1 mit.

Der Nutzen der zusätzlichen Kühlung ergibt sich zum einen aus der schnelleren Abkühlung des Bauteils auf Entformungstemperatur, was eine kürzere Zykluszeit ermöglicht. Zum anderen ergibt sich der Vorteil einer schnelleren Konsolidierung der Schmelze, wenn die Kühlzone direkt nach der Angusszone über das Formteil bewegt wird bzw. die Schmelze direkt nach der Angusszone über die Kühlzone bewegt wird. Des Weiteren kommt es zu einer, wie bereits oben beschriebener, Kalibrierung der Bauteilaußenseite. Auch die Anformung eines Topfbodens ist bei diesem Werkzeugkonzept möglich.

Die Kühlung und Beheizung eines Spritzgießwerkzeugs lassen sich als Temperierung zusammenfassen. Die Werkzeugkühlung kann vorliegend durch ein flüssiges Medium, beispielsweise Wasser mit Korrosionsschutzadditiven erfolgen. Die Kühlung beim Spritzgießprozess ist nötig, um das gespritzte Bauteil bis zur Entformungstemperatur abzukühlen. Um eine möglichst kurze Zykluszeit für den gesamten Spritzgießprozess zu erreichen, ist das Kunststoffformteil in möglichst kurzer Zeit soweit abzukühlen, bis es eritformt werden kann. Nachteilig wirkt sich eine zu schnelle Abkühlung auf die Maßhaltigkeit des Teils aus, da durch eine ungleichmäßige Abkühlung Spannungen im Formteil auftreten, die zu einem Verzug des Bauteils führen können. Auch für die mechanischen Eigenschaften des Bauteils sind die inneren Spannungen ungünstig und können zu einem vorzeitigen Formteilversagen führen. Bei Spalttöpfen 25 sind aufgrund der röhrenförmigen Gestalt und der gleichmäßigen Abkühlung der Schmelze in Umfangsrichtung nur geringe interne Spannungen zu erwarten. Somit kann eine rasche Abkühlung vorgesehen werden, um eine kurze Zykluszeit zu erreichen. Für den Fall einer thermoplastischen Formmasse kommen bei dem Formwerkzeug 1 gemäß Figur 5 zwei Kühlzonen zum Einsatz; die eine im Formkern 4 mit den Kühlkanälen 161, die andere an der Außenseite der Kavität 15, Kühleinrichtung 19. Die Kühlkanäle der Kühleinrichtung 19 verlaufen spiralförmig um die Kavität 15. Die Kühlzone an der Außenseite bewegt sich dabei während des Einspritzens, der Anschnittzone nachfolgend, über das Werkstück. Am Ende des Einspritzvorgangs wird das gesamte Bauteil von der Kühlzone bedeckt und kann so bis zum Erreichen der Entformungstemperatur abgekühlt werden. Da sich das Formteil nicht relativ zum Formkern 4 bewegt, befindet sich die Kühlzone im Formkern immer auf ganzer Länge im Inneren des Formteils.

Zur Herstellung eines Spalttopfes 25, das im Gegensatz zu einem zweiseitig offenen Spaltrohr 25 an einer Seite verschlossen ist, kann ein Boden 23 angeformt werden. Hierfür kann bei der Ausführungsvariante gemäß Figur 2, d.h. ohne eine bewegliche, die Kavität 15 in Schließrichtung A axial begrenzende Werkzeugplatte, wie sie der Dichtplatte 12 in den Figuren 1, 4 und 5 entspricht, eine Erweiterung der Kavität 15 zwischen der Stirnseite des Formkerns 4 und dem Boden 21 des Hohlraumes 10 vorgesehen werden. Bei den Ausführungsvarianten nach Figuren 1, 4 und 5 mit einer die Kavität 15 in Schließrichtung A axial begrenzenden Dichtplatte 12, kann dessen Bewegung beim Öffnungsvorgang rechtzeitig gestoppt werden, damit sich durch die Verfahrbewegung des Formkerns 4 noch vor dem Ende des Einspritzvorgangs ein Hohlraum zwischen der Stirnseite des Formkern 4 und der Dichtplatte 12 zur Befüllung bildet. Die Füllung dieses Hohlraumes erfolgt dann im Anschluss an die Füllung der Kavität 15 über den ringförmigen Bandanguss, d.h. den Ringspalt 17, sobald dieser oder die Kavität 15 das Ende seines Verfahrwegs erreicht hat. Dabei ergibt sich ein Zusammenfluss der Schmelzefronten im Mittelpunkt des Bodens. Durch eine entsprechende konstruktive Verstärkung des Bodens kann eine Formteilschwächung im Mittelpunkt vermieden werden. Eine Verstärkung kann durch eine größere Wandstärke des Bodens oder ein eingelegtes Verstärkungsmittel aus Endlosfasern erfolgen. Bei der Verwendung eines Gewebeschlauchs, kann dieser in den Bodenbereich gezogen werden, so dass kein zusätzliches Verstärkungsmittel erforderlich ist.

Da dieses Zusammenfließen in einem "toten" Bereich der Kavität geschieht, muss hier für eine zusätzliche Entlüftung gesorgt werden. Dies kann dadurch erfolgt, dass ein Entlüftungskanal in dem Dichtkolben 12 zwischen diesem "toten Bereich" und dem Hohlraum sowie zwischen Hohlraum 10 und Außenseite des ersten Werkzeugteils vorgesehen wird.

Bei dem Aufbringen des Verstärkungsmittels 20 auf den Formkern 4 sind unterschiedliche Orientierungen der Endlosfasern möglich. Faserverstärkte Kunststoffe sind stark anisotrope Werkstoffe, bei denen die mechanischen Eigenschaften stark vom Winkel der angreifenden Kraft zur Faserorientierung abhängig sind. Deswegen kommt der Wahl einer geeigneten Faserorientierung eine sehr wichtige Bedeutung zu.

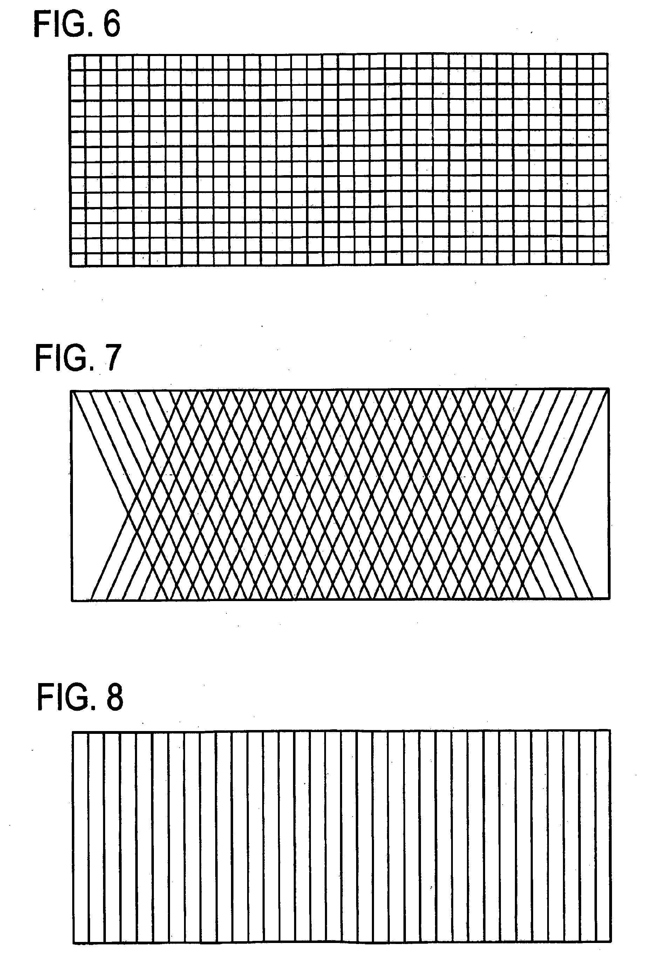

Beispielsweise kann eine rechtwinklige Ausrichtung von zwei Gewebeschichten in axialer und tangentialer Richtung parallel zu den angreifenden Kräften erfolgen. Die Dicke der Gewebeschichten ist dabei von den Belastungen abhängig, die in tangentialer Richtung doppelt so groß ist wie in axialer Richtung. Diese Anordnung erbringt die höchstmögliche Festigkeit und ist in Figur 6 dargestellt.

Alternativ kann bei dem Einsatz von Wickeltechnik zur Faserablage oder beim Einsatz eines vorgefertigten so genannten Gewebestrumpfs, oder auch Gewebeschlauchs, zwei gleichstarke Gewebelagen zu verwenden, deren Faserorientierung in beiden Lagen um den gleichen Betrag von der Mittellinie abweichen, wobei die Mittellinie dabei die Richtung der größeren Kraftkomponente bezeichnet. Es entsteht dabei eine kreuzweise Wicklung der beiden Faserlagen, siehe Figur 7.

Eine weitere Strategie zur Faseranordnung besteht darin, die Fasern tangential anzuordnen. Technisch ist dies möglich, weil die axialen Kräfte im Formteil durch das umgebende Pumpengehäuse aufgefangen werden können. Somit brauchen nur noch die tangentialen Kräfte von den Fasern aufgenommen werden. Die nötige Dicke der Faserschicht entspricht der tangentialen Schicht aus der erstgenannten Anordnung. Weiterer Vorteil dieser Faseranordnung ist, dass die Fertigung im Wickelverfahren möglich ist. Diese Anordnung ist in Figur 8 dargestellt.

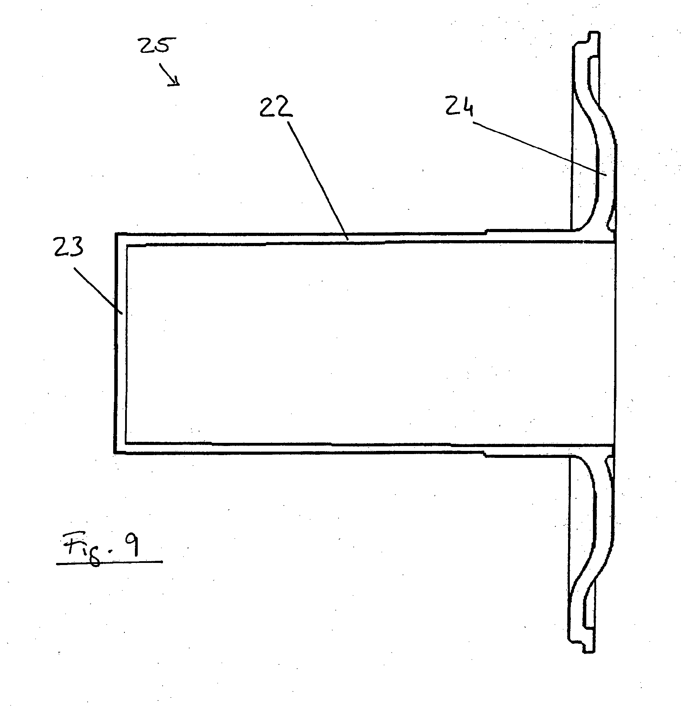

In einer nicht dargestellten Ausführungsvariante weist das erste Werkzeugteil 2 eine scheibenförmige oder tellerförmige, die Öffnung des Hohlraums 10 umgebende Vertiefung zur Ausbildung auf, die sich radial nach außen erstreckt. Sie kann vor dem Beginn oder am Ende der Verfahrbewegung des Formkerns 4, d.h bei Formkern 4 mit Kunststoffformmasse gefüllt werden, so dass an das Spaltrohr 25 ein Kragen 24 angeformt wird. Der Bewegungsvorgang wird dann unmittelbar begonnen, wenn die Vertiefung mit Kunststoffformmasse gefüllt ist. Ein Spalttopf 25 mit Kragen 24 ist in Figur 9 dargestellt.

## Patentansprüche

1. Verfahren zur Herstellung hochbelastbarer Kunststoffformteile mit Hohlprofil, insbesondere Spaltrohre (25) oder Spalttöpfe (25) für Pumpen, in einem Formwerkzeug (1), mit mindestens einem ersten und einem zweiten Werkzeugteil (2, 3), von denen zumindest ein Werkzeugteil (2, 3) zum Öffnen und Schließen des Formwerkzeugs (1) relativ gegenüber dem anderen Werkzeugteil (2, 3) bewegt wird, wobei in dem ersten Werkzeugteil (2) ein länglicher Hohlraum (10) ausgebildet ist, in den ein länglicher Formkern (4) des zweiten Werkzeugteils (3) koaxial unter Ausbildung einer dem Hohlprofil (10) entsprechenden Kavität (15) eingeführt wird, und zunächst ein Verstärkungsmittel (20) aus Endlosfasem auf den Formkern (4) aufgebracht wird, **dadurch gekennzeichnet, dass** das Formwerkzeug (1) danach eine Öffnungs- oder Schließbewegung (A, B) ausführt, während der durch eine oder eine Vielzahl sich entlang des Umfangs der Kavität (15) erstreckende Anspritzöffnung (8)/ Anspritzöffnungen (8) in radialer Richtung kontinuierlich eine das Verstärkungsmittel (20) vollständig umschließende Kunststoffformmasse in die Kavität (15) eingespritzt wird.

2. Verfahren nach Anspruch 1, **dadurch gekennzeichnet, dass** die Anspritzöffnung (8) oder Anspritzöffnungen (8) aus einer Verteilerkammer (7) mit Formmasse gespeist werden.

3. Verfahren nach Anspruch 1 oder 2, **dadurch gekennzeichnet, dass** der Formkern (4) in den Hohlraum (10) des ersten Werkzeugteils (2) bewegt wird.

4. Verfahren nach einem der vorherigen Ansprüche, **dadurch gekennzeichnet, dass** als Verstärkungsmittel (20) ein Gewebeschlauch oder Wickel verwendet wird, der über den Formkern (4) gestülpt wird.

5. Verfahren nach einem der vorherigen Ansprüche, **dadurch gekennzeichnet, dass** das Verstärkungsmittel (20) vor dem Einspritzen der Kunststoffformmasse vorkonsolidiert wird.

6. Verfahren nach Anspruch 5, **dadurch gekennzeichnet, dass** der Formkern (4) zur Vorkonsolidierung des Verstärkungsmittels (20) beheizt wird.

7. Verfahren nach einem der vorherigen Ansprüche, **dadurch gekennzeichnet, dass** die Formmasse in radialer Richtung nach Innen in die Kavität (15) eingespritzt wird.

8. Verfahren nach einem der vorherigen Ansprüche, **dadurch gekennzeichnet, dass** die eingespritzte Formmasse bei der Öffnungs- oder Schließbewegung an einer Temperiereinrichtung (16, 19, 161) des Formwerkzeugs (1) vorbeigeführt wird und/ oder dass eine Temperiereinrichtung (16, 19, 161) des Formwerkzeugs (1) an der eingespritzten Formmasse vorbeigeführt wird.

9. Verfahren nach Anspruch 8, **dadurch gekennzeichnet, dass** die Temperierung durch den Formkern (4) erfolgt.

10. Verfahren nach einem der vorherigen Ansprüche, **dadurch gekennzeichnet, dass** sich bei der Bewegung des Formkerns (4) eine stirnseitig an diesem anliegende erste Dichtplatte (12) mit bewegt.

11. Verfahren nach Anspruch 10, **dadurch gekennzeichnet, dass** die Bewegung der ersten Dichtplatte (12) bei der Öffnungsbewegung bei Erreichen der Anspritzöffnung (8) gestoppt wird und sich der Formkern (4) geringfügig weiterbewegt, so dass sich zwischen der ersten Dichtplatte (12) und der Stirnseite des Formkerns (4) ein Abstand bildet, der zur Ausbildung eines Spaltrohrbodens (23) mit Kunststoffformmasse gefüllt wird.

12. Verfahren nach einem der vorherigen Ansprüche, **dadurch gekennzeichnet, dass** vor dem Beginn der Bewegung des beweglichen Werkzeugteils (2, 3) oder am Ende der Bewegung eine scheibenförmige, die Öffnung des Hohlraums (10) umgebende Vertiefung zum Anspritzen eines Kragens (24) an das Kunststoffformteil mit Kunststoffformmasse gefüllt wird.

13. Vorrichtung zur Herstellung hochbelastbarer Kunststoffformteile mit Hohlprofil, insbesondere Spaltrohre (25) oder Spalttöpfe (25) für Pumpen, mit einem Formwerkzeug (1), das zumindest ein erstes und ein zweites Werkzeugteil (2, 3) umfasst, von denen zumindest ein Werkzeugteil (2, 3) zum Öffnen und Schließen des Formwerkzeugs (1) relativ gegenüber dem anderen Werkzeugteil (2, 3) beweglich ist, wobei in dem ersten Werkzeugteil (2) ein länglicher Hohlraum (10) ausgebildet ist, in den ein länglicher Formkern (4) des zweiten Werkzeugteils (3) koaxial unter Ausbildung einer dem Hohlprofil entsprechenden Kavität (15) einführbar ist, und auf den Formkern (4) ein Verstärkungsmittel (20) aus Endlosfasern aufbringbar ist, **dadurch gekennzeichnet, dass** während der Öffnung- oder Schließbewegung (A, B) durch eine oder eine Vielzahl sich entlang des Umfangs der Kavität (15) erstreckende Anspritzöffnung (8)/ Anspritzöffnungen (8) in radialer Richtung kontinuierlich eine das Verstärkungsmittel (20) vollständig umschließende Kunststoffformmasse in die Kavität (15) einspritzbar ist.

14. Vorrichtung nach Anspruch 13, **dadurch gekennzeichnet, dass** das erste Werkzeugteil (2) stationär und das zweite Werkzeugteil (3) beweglich ist, wobei der Formkern (4) in den Hohlraum (10) des ersten Werkzeugteil (2) einführbar ist.

15. Vorrichtung nach Anspruch 13 oder 14, **dadurch gekennzeichnet, dass** das erste Werkzeugteil (2) und/ oder das zweite Werkzeugteil (3) die Anspritzöffnung oder Anspritzöffnungen (8) aufweist.

16. Vorrichtung nach einem der Ansprüche 13 bis 15, **dadurch gekennzeichnet, dass** das Formwerkzeug (1) eine, insbesondere ringförmige, Verteilerkammer (7) für Formmasse aufweist, aus der die eine Anspritzöffnung (8) oder die Anspritzöffnungen (8) speisbar sind.

17. Vorrichtung nach einem der Ansprüche 13 bis 16, **dadurch gekennzeichnet, dass** die Anspritzöffnung (8) über einen Ringkanal (17) oder die Vielzahl Anspritzöffnungen (8) über Einzelkanäle mit der Verteilerkammer (7) in Verbindung steht/ stehen.

18. Vorrichtung nach einem der Ansprüche 13 bis 17, **dadurch gekennzeichnet, dass** das erste Werkzeugteil (2) und/ oder der Formkern (4) eine Temperiereinrichtung (16, 161, 19) zur Temperierung der eingespritzten Formmasse aufweist.

19. Vorrichtung nach Anspruch 18, **dadurch gekennzeichnet, dass** die Temperiereinrichtung (16, 161, 19) gegenüber und/ oder neben der Anspritzöffnung/ den Anspritzöffnungen (8) angeordnet ist.

20. Vorrichtung nach einem der Ansprüche 13 bis 19, **dadurch gekennzeichnet, dass** das Formwerkzeug (1) eine Vorkammer (13) für eine zur Herstellung des Formteils vorgesehene Menge an Formmasse aufweist, wobei durch die Bewegung eines der Werkzeugteile (2, 3), insbesondere des Formkerns (4), ein Druck in der Vorkammer (13) aufbaubar ist, der die Formmasse zur Anspritzöffnung (8)/ zu den Anspritzöffnungen (8) drückt.

21. Vorrichtung nach Anspruch 20, **dadurch gekennzeichnet, dass** in die Vorkammer (13) ein mit dem Formkern (4) in Verbindung stehender Kolben (11) einführbar ist.

22. Vorrichtung nach einem der Ansprüche 13 bis 21, **dadurch gekennzeichnet, dass** zwischen dem ersten und dem zweiten Werkzeugteil (2, 3) eine zweite Dichtplatte (6) angeordnet ist, die den Formkern (4) umschließt.

23. Vorrichtung nach einem der Ansprüche 13 bis 22, **dadurch gekennzeichnet, dass** das erste Werkzeugteil (2) und/oder die zweite Dichtplatte (6) eine scheibenförmige, die Öffnung des Hohlraums (10) umgebende Vertiefung zum Anspritzen eines Kragens (24) an das Kunststoffformteil aufweist.

24. Vorrichtung nach einem der Ansprüche 22 oder 23, **dadurch gekennzeichnet, dass** der Formkern (4) relativ zur zweiten Dichtplatte (6) beweglich ist.

25. Vorrichtung nach einem der Ansprüche 13 bis 24, **dadurch gekennzeichnet, dass** auf dem Formkern (4) eine Abstreifhülse (5) angeordnet ist.

26. Vorrichtung nach Anspruch 25, **dadurch gekennzeichnet, dass** die Abstreifhülse (5) einstückig mit der zweiten Dichtplatte (6) ausgebildet ist.

27. Vorrichtung nach einem der Ansprüche 13 bis 26, **dadurch gekennzeichnet, dass** das Formwerkzeug (1) einen Plastifizierzylinder (26) mit einer Schnecke umfasst, dessen Längsachse koaxial zur Bewegungsrichtung in Öffnungs- und Schließrichtung verläuft.

## Claims

1. Method for the production of heavy-duty plastic moulded parts with a hollow profile, particularly separation cans (25) or containment shells (25) for pumps, in a moulding tool (1), having at least a first and a second tool part (2, 3), of which at least one tool part (2, 3) is moved in relation to the other tool part (2, 3) to open and close the moulding tool (1), wherein a longitudinal hollow space (10) is formed in the first tool part (2), into which space a longitudinal mould core (4) of the second tool part (3) is inserted coaxially, forming a cavity (15) corresponding to the hollow profile (10), and firstly a reinforcing means (20) of continuous fibres is applied to the mould core (4), **characterized in that** the moulding tool (1) subsequently carries out an opening or closing movement (A, B), during which a plastics moulding compound is continuously injected radially into the cavity (15) through an injection opening (8) or a multiplicity of injection openings (8) extending along the circumference of the cavity (15), the compound completely enclosing the reinforcing means (20).

2. Method according to Claim 1, **characterized in that** the injection opening (8) or injection openings (8) is/are fed with moulding compound from a distribution chamber (7).

3. Method according to Claim 1 or 2, **characterized in that** the mould core (4) is moved into the hollow space (10) of the first tool part (2).

4. Method according to one of the preceding claims, **characterized in that** a fabric tube or wound roll, which is fitted over the mould core (4), is used as the reinforcing means (20).

5. Method according to one of the preceding claims, **characterized in that** the reinforcing means (20) is pre-consolidated before the injection of the plastics moulding compound.

6. Method according to Claim 5, **characterized in that** the mould core (4) is heated for the pre-consolidation of the reinforcing means (20).

7. Method according to one of the preceding claims, **characterized in that** the moulding compound is injected radially inwards into the cavity (15).

8. Method according to one of the preceding claims, **characterized in that**, during the opening or closing movement, the injected moulding compound is made to pass a temperature control device (16, 19, 161) of the moulding tool (1) and/or **in that** a temperature control device (16, 19, 161) of the moulding tool (1) is made to pass the injected moulding compound.

9. Method according to Claim 8, **characterized in that** the temperature control is performed by the mould core (4).

10. Method according to one of the preceding claims, **characterized in that**, during the movement of the mould core (4), a first sealing plate (12) lying against the end face of said core moves along with it.

11. Method according to Claim 10, **characterized in that** the movement of the first sealing plate (12) during the opening movement is stopped when the injection opening (8) is reached, and the mould core (4) is moved a little further, so that between the first sealing plate (12) and the end face of the mould core (4) there forms a distance, which is filled with plastics moulding compound to form a separation can base (23).

12. Method according to one of the preceding claims, **characterized in that**, before the beginning of the movement of the movable tool part (2, 3), or at the end of the movement, a disc-shaped depression surrounding the opening of the hollow space (10) is filled with plastics moulding compound to mould a collar (24) onto the plastic moulded part.

13. Device for the production of heavy-duty plastic moulded parts with a hollow profile, particularly separation cans (25) or containment shells (25) for pumps, having a moulding tool (1), which comprises at least a first and a second tool part (2, 3), of which at least one tool part (2, 3) is movable in relation to the other tool part (2, 3) to open and close the moulding tool (1), wherein a longitudinal hollow space (10) is formed in the first tool part (2), into which space a longitudinal mould core (4) of the second tool part (3) can be inserted coaxially, forming a cavity (15) corresponding to the hollow profile, and a reinforcing means (20) of continuous fibres can be applied to the mould core (4), **characterized in that**, during the opening or closing movement (A, B), a plastics moulding compound can be continuously injected radially into the cavity (15) through an injection opening (8) or a multiplicity of injection openings (8) extending along the circumference of the cavity (15), the compound completely enclosing the reinforcing means (20).

14. Device according to Claim 13, **characterized in that** the first tool part (2) is stationary and the second tool part (3) is movable, wherein the mould core (4) can be inserted into the hollow space (10) of the first tool part (2).

15. Device according to Claim 13 or 14, **characterized in that** the first tool part (2) and/or the second tool part (3) has/have the injection opening or injection openings (8).

16. Device according to one of Claims 13 to 15, **characterized in that** the mould tool (1) has a distribution chamber (7) for moulding compound, in particular an annular distribution chamber (7), from which the one injection opening (8) or the injection openings (8) can be fed.

17. Device according to one of Claims 13 to 16, **characterized in that** the injection opening (8) is in connection with the distribution chamber (7) via an annular channel (17) or the multiplicity of injection openings (8) are in connection with the distribution chamber (7) via individual channels.

18. Device according to one of Claims 13 to 17, **characterized in that** the first tool part (2) and/or the mould core (4) has a temperature control device (16, 161, 19) for controlling the temperature of the injected moulding compound.

19. Device according to Claim 18, **characterized in that** the temperature control device (16, 161, 19) is arranged opposite and/or alongside the injection opening or the injection openings (8).

20. Device according to one of Claims 13 to 19, **characterized in that** the moulding tool (1) has a prechamber (13) for an amount of moulding compound intended for producing the moulded part, wherein a pressure that forces the moulding compound to the injection opening (8) or to the injection openings (8) can be built up in the prechamber (13) by the movement of one of the tool parts (2, 3), in particular the mould core (4).

21. Device according to Claim 20, **characterized in that** a ram (11) in connection with the mould core (4) can be inserted into the prechamber (13).

22. Device according to one of Claims 13 to 21, **characterized in that** a second sealing plate (6), which encloses the mould core (4), is arranged between the first and second tool parts (2, 3).

23. Device according to one of Claims 13 to 22, **characterized in that** the first tool part (2) and/or the second sealing plate (6) has a disc-shaped depression, surrounding the opening of the hollow space (10), for moulding a collar (24) onto the plastic moulded part.

24. Device according to either of Claims 22 and 23, **characterized in that** the mould core (4) is movable in relation to the second sealing plate (6).

25. Device according to one of Claims 13 to 24, **characterized in that** a stripping sleeve (5) is arranged on the mould core (4).

26. Device according to Claim 25, **characterized in that** the stripping sleeve (5) is formed in one piece with the second sealing plate (6).

27. Device according to one of Claims 13 to 26, **characterized in that** the moulding tool (1) comprises a plasticizing cylinder (26) with a screw, the longitudinal axis of which runs coaxially in relation to the direction of movement in the opening and closing direction.

## Revendications

1. Procédé de fabrication de pièces moulées en matière plastique à haute résistance présentant un profilé creux, en particulier de tubes fendus (25) ou de pots d'entrefer (25) pour pompes, dans un outil de moulage (1), comprenant au moins une première et une deuxième partie d'outil (2, 3), dont au moins une partie d'outil (2, 3) est déplacée pour l'ouverture et la fermeture de l'outil de moulage (1) relativement par rapport à l'autre partie d'outil (2, 3), un espace creux allongé (10) étant réalisé dans la première partie d'outil (2), dans lequel un noyau de moulage allongé (4) de la deuxième partie d'outil (3) est introduit coaxialement en formant une cavité (15) correspondant au profilé creux (10), et un moyen de renforcement (20) constitué de fibres sans fin étant d'abord appliqué sur le noyau de moulage (4), **caractérisé en ce que** l'outil de moulage (1) effectue ensuite un déplacement d'ouverture ou de fermeture (A, B), pendant lequel, par une ouverture de surmoulage (8) ou une pluralité d'ouvertures de surmoulage (8) s'étendant le long de la périphérie de la cavité (15), une masse de moulage en matière plastique entourant complètement le moyen de renforcement (20) est injectée en continu dans la direction radiale dans la cavité (15).

2. Procédé selon la revendication 1, **caractérisé en ce que** l'ouverture de surmoulage (8) ou les ouvertures de surmoulage (8) sont alimentées avec la masse de moulage à partir d'une chambre de distribution (7).

3. Procédé selon la revendication 1 ou 2, **caractérisé en ce que** le noyau de moulage (4) est déplacé dans l'espace creux (10) de la première partie d'outil (2).

4. Procédé selon l'une quelconque des revendications précédentes, **caractérisé en ce que** l'on utilise comme moyen de renforcement (20) un tuyau en tissu ou un rouleau qui est enfilé par-dessus le noyau de moulage (4).

5. Procédé selon l'une quelconque des revendications précédentes, **caractérisé en ce que** le moyen de renforcement (20) est pré-consolidé avant l'injection de la masse de moulage en matière plastique.

6. Procédé selon la revendication 5, **caractérisé en ce que** le noyau de moulage (4) est chauffé avant la pré-consolidation du moyen de renforcement (20).

7. Procédé selon l'une quelconque des revendications précédentes, **caractérisé en ce que** la masse de moulage est injectée dans la direction radiale vers l'intérieur dans la cavité (15).

8. Procédé selon l'une quelconque des revendications précédentes, **caractérisé en ce que** la masse de moulage injectée, lors du déplacement d'ouverture ou de fermeture, est guidée devant un dispositif de mise en température (16, 19, 161) de l'outil de moulage (1) et/ou **en ce qu'**un dispositif de mise en température (16, 19, 161) de l'outil de moulage (1) est guidé devant la masse de moulage injectée.

9. Procédé selon la revendication 8, **caractérisé en ce que** la mise en température s'effectue par le noyau de moulage (4).

10. Procédé selon l'une quelconque des revendications précédentes, **caractérisé en ce qu'**une première plaque d'étanchéité (12), lors du déplacement du noyau de moulage (4), se déplace conjointement avec celui-ci en s'appliquant contre celui-ci du côté frontal.

11. Procédé selon la revendication 10, **caractérisé en ce que** le déplacement de la première plaque d'étanchéité (12), lors du déplacement d'ouverture, est arrêté une fois que l'ouverture de surmoulage (8) est atteinte, et le noyau de moulage (4) continue de se déplacer quelque peu de sorte qu'il se forme entre la première plaque d'étanchéité (12) et le côté frontal du noyau de moulage (4) un espace qui est rempli avec la masse de moulage en matière plastique pour créer un fond de tube fendu (23).

12. Procédé selon l'une quelconque des revendications précédentes, **caractérisé en ce qu'**avant le début du déplacement de la partie d'outil mobile (2, 3) ou à la fin du déplacement, un renfoncement en forme de disque, entourant l'ouverture de l'espace creux (10), est rempli avec la masse de moulage en matière plastique pour le surmoulage d'un rebord (24) sur la pièce moulée en matière plastique.

13. Dispositif de fabrication de pièces moulées en matière plastique à haute résistance présentant un profilé creux, en particulier de tubes fendus (25) ou de pots d'entrefer (25) pour pompes, comprenant un outil de moulage (1) qui comprend au moins une première et une deuxième partie d'outil (2, 3), dont au moins une partie d'outil (2, 3) est déplaçable pour l'ouverture et la fermeture de l'outil de moulage (1) relativement par rapport à l'autre partie d'outil (2, 3), un espace creux allongé (10) étant réalisé dans la première partie d'outil (2), dans lequel un noyau de moulage allongé (4) de la deuxième partie d'outil (3) peut être introduit coaxialement en formant une cavité (15) correspondant au profilé creux, et un moyen de renforcement (20) constitué de fibres sans fin pouvant être appliqué sur le noyau de moulage (4), **caractérisé en ce que** pendant le déplacement d'ouverture ou de fermeture (A, B), par une ouverture de surmoulage (8) ou une pluralité d'ouvertures de surmoulage (8) s'étendant le long de la périphérie de la cavité (15), une masse de moulage en matière plastique entourant complètement le moyen de renforcement (20) peut être injectée en continu dans la direction radiale dans la cavité (15).

14. Dispositif selon la revendication 13, **caractérisé en ce que** la première partie d'outil (2) est stationnaire et la deuxième partie d'outil (3) est mobile, le noyau de moulage (4) pouvant être introduit dans l'espace creux (10) de la première partie d'outil (2).

15. Dispositif selon la revendication 13 ou 14, **caractérisé en ce que** la première partie d'outil (2) et/ou la deuxième partie d'outil (3) présentent l'ouverture de surmoulage ou les ouvertures de surmoulage (8).

16. Dispositif selon l'une quelconque des revendications 13 à 15, **caractérisé en ce que** l'outil de moulage (1) présente une chambre de distribution (7), notamment de forme annulaire, pour la masse de moulage, à partir de laquelle l'ouverture de surmoulage (8) ou les ouvertures de surmoulage (8) peuvent être alimentées.

17. Dispositif selon l'une quelconque des revendications 13 à 16, **caractérisé en ce que** l'ouverture de surmoulage (8) est en liaison par le biais d'un canal annulaire (17) ou la pluralité d'ouvertures de surmoulage (8) sont en liaison par le biais de canaux individuels avec la chambre de distribution (7).

18. Dispositif selon l'une quelconque des revendications 13 à 17, **caractérisé en ce que** la première partie d'outil (2) et/ou le noyau de moulage (4) présentent un dispositif de mise en température (16, 161, 19) pour la mise en température de la masse de moulage injectée.

19. Dispositif selon la revendication 18, **caractérisé en ce que** le dispositif de mise en température (16, 161, 19), est disposé en face et/ou à côté de l'ouverture de surmoulage/des ouvertures de surmoulage (8).

20. Dispositif selon l'une quelconque des revendications 13 à 19, **caractérisé en ce que** l'outil de moulage (1) présente une pré-chambre (13) pour une quantité de masse de moulage prévue pour fabriquer la pièce moulée, une pression pouvant être établie dans la pré-chambre (13) par le déplacement de l'une des parties d'outil (2, 3), en particulier du noyau de moulage (4), laquelle pression presse la masse de moulage vers l'ouverture de surmoulage (8)/vers les ouvertures de surmoulage (8).

21. Dispositif selon la revendication 20, **caractérisé en ce qu'**un piston (11) en liaison avec le noyau de moulage (4) peut être introduit dans la pré-chambre (13).

22. Dispositif selon l'une quelconque des revendications 13 à 21, **caractérisé en ce qu'**une deuxième plaque d'étanchéité (6) est disposée entre la première et la deuxième partie d'outil (2, 3), laquelle entoure le noyau de moulage (4).

23. Dispositif selon l'une quelconque des revendications 13 à 22, **caractérisé en ce que** la première partie d'outil (2) et/ou la deuxième plaque d'étanchéité (6) présentent un renfoncement en forme de disque, entourant l'ouverture de l'espace creux (10), pour le surmoulage d'un rebord (24) sur la partie moulée en matière plastique.

24. Dispositif selon l'une quelconque des revendications 22 ou 23, **caractérisé en ce que** le noyau de moulage (4) est mobile par rapport à la deuxième plaque d'étanchéité (6).

25. Dispositif selon l'une quelconque des revendications 13 à 24, **caractérisé en ce qu'**une douille de raclage (5) est disposée sur le noyau de moulage (4).

26. Dispositif selon la revendication 25, **caractérisé en ce que** la douille de raclage (5) est réalisée d'une seule pièce avec la deuxième plaque d'étanchéité (6).

27. Dispositif selon l'une quelconque des revendications 13 à 26, **caractérisé en ce que** l'outil de moulage (1) comprend un cylindre de plastification (26) avec une vis sans fin dont l'axe longitudinal s'étend coaxialement par rapport à la direction de déplacement dans la direction d'ouverture et de fermeture.
